# EUROPÄISCHE PATENTANMELDUNG

(11) **EP 1 628 184 A1**
(43) Veröffentlichungstag der Anmeldung: **22.02.2006**
(21) Anmeldenummer: 04019777.4
(22) Anmeldetag: 20.08.2004
(51) Int. Cl.: G06F 1/00

(54) **Verfahren und Computersystem zur Durchführung eines netzwerkgestützten Geschäftsprozesses**

(71) Anmelder: BASF Aktiengesellschaft, 67056 Ludwigshafen (DE)
(72) Erfinder: Musseleck, Johannes, 67547 Worms (DE); Ahlers, Jürgen, 68649 Gross-Rohrheim (DE); Eichert, Hermann, 67468 Frankenstein (DE); Wewer, Kerim, 68159 Mannheim (DE); Katz, Reinhard, 67098 Bad Dürkheim (DE)
(74) Vertreter: Hössle Kudlek & Partner

(57) **Zusammenfassung**

Die Erfindung betrifft ein Verfahren zur Durchführung eines netzwerkgestützten Kunden-Geschäftsprozesses und ein Verfahren zur Bereitstellung eines Zugangs zu einem zugangsgeschützten Bereich eines Servers, wobei jeweils ein Zugang zu dem zugangsgeschützten Bereich (202) in dem Server von einem Client (210) durch elektronisches Aktivieren einer Zugangsberechtigung erfolgt.

## Beschreibung

Die vorliegende Erfindung betrifft allgemein den geschützten Austausch von Informationen. Insbesondere betrifft die vorliegende Erfindung ein Verfahren und ein Computersystem zur Durchführung eines netzwerkgestützten Geschäftsprozesses sowie ein Verfahren zur Bereitstellung eines Zugangs zu einem zugangsgeschützten Bereich eines Servers und eine elektronisch aktivierbare Zugangsberechtigung.

In der modernen Kommunikation zwischen Unternehmen stellt die kostengünstige Integration von Geschäftsprozessen zwischen Geschäftspartnern eine große Herausforderung dar.

Bekannt ist beispielsweise eine Datenübertragung zwischen Enterprise Resource Planning (ERP)-Systemen mittels Electronic Data Interchange (EDI). Derartige Konzepte basieren auf einer bidirektional integrierten Kommunikation zwischen Geschäftspartnern. Hierfür ist es notwendig, genaue Absprachen über die auszutauschenden Datenformate zu treffen, wozu ein entsprechendes "Mapping" erforderlich ist. Aufgrund dabei entstehender initialer Kosten ist diese Art der Integration in vielen Fällen unwirtschaftlich.

Aus diesem Grunde sind einige Unternehmen dazu übergegangen, ihren Geschäftspartnern Informationen auf einem Internetportal zur Verfügung zu stellen, um somit dem Geschäftspartner die Möglichkeit zu geben, innerhalb dieses Internetportals Informationen einzusehen oder einzugeben. Für die Eingabe der Informationen entsteht für den Geschäftspartner jedoch ein Aufwand, den dieser nicht unbedingt zu tragen bereit ist.

Aus diesem Grund wurden in den letzten Jahren sog. "Light-Integrationsmöglichkeiten" entwickelt, die unidirektional Geschäftsprozesse integrieren. Ein Geschäftspartner (bspw. Kunde) schickt hierbei z.B. auf elektronischem Weg einen Geschäftsprozess an einen anderen Geschäftspartner (bspw. Lieferant). Dieser Geschäftsprozess wird automatisch in das System des Lieferanten übernommen. Somit entsteht nur auf einer Seite ein Mapping-Aufwand. Eine solche Lösung bietet sich zum Beispiel in Märkten mit einer hohen Konzentration auf einer der beiden Seiten an, da hier einem Geschäftspartner viele andere gegenüberstehen und somit bei der Anpassung Skaleneffekte erzielt werden können.

Eine Rückmeldung von dem Lieferanten an den Kunden erfolgt in der Regel per E-Mail oder Fax, also nicht integriert. Der Informationsgehalt einer solchen Rückmeldung ist üblicherweise geringer als der Informationsgehalt, der über das Internetportal erzielbar ist, in dem oft auf eine Vielzahl von Daten aus dem ERP-System zurückgegriffen wird.

Die Erfindung schlägt ausgehend hiervon ein Verfahren mit den Merkmalen des Anspruchs 1, ein Computersystem mit den Merkmalen des Anspruchs 8, einen Server mit den Merkmalen des Anspruchs 11, eine elektronisch aktivierbare Zugangsberechtigung mit den Merkmalen des Anspruchs 12 und ein Verfahren mit den Merkmalen des Anspruchs 16 vor.

Bei dem erfindungsgemäßen Verfahren zur Durchführung eines netzwerkgestützten Geschäftsprozesses laufen als Reaktion auf eine in dem Server eingehende und von einem Client stammende Anfrage folgende Schritte ab:
- Definieren eines der Anfrage zugeordneten zugangsgeschützten Bereichs in dem Server,
- Erzeugen einer elektronisch aktivierbaren Zugangsberechtigung, die eine Adressierung des zugangsgeschützten Bereichs umfasst, und
- Übermitteln der Zugangsberechtigung an den Client, von dem die Anfrage stammt,
wobei ein Zugang zu dem zugangsgeschützten Bereich von dem Client durch elektronisches Aktivieren der Zugangsberechtigung erfolgt. Das Definieren eines der Anfrage zugeordneten zugangsgeschützten Bereichs in dem Server umfasst dabei sowohl das Erzeugen eines bisher nicht vorhandenen, also neuen zugangsgeschützten Bereichs als auch das Festlegen oder richtige Zuordnen eines bereits vorhandenen zugangsgeschützten Bereichs.

Das Verfahren betrifft demnach eine datensichere Kommunikation zwischen dem Server und dem Client, unabhängig davon mit wie vielen weiteren Servern, Clients, Computern, Recheneinheiten, Netzwerken, wie Internet, WorldWideWeb oder einem Intranet diese verbunden sind. Der zugangsgeschützte Bereich ist auf dem Server abgespeichert und/oder generiert.

Der Begriff "Client" ist im Rahmen der vorliegenden Anmeldung im breitestmöglichen Sinne zu verstehen, d.h. ein eigenständiges oder Teil eines größeren Systems bildendes Gerät, mittels dem über ein beliebiges Netzwerk (Intranet, Internet, LAN, usw.) eine Anfrage an ein einen erfindungsgemäß eingerichteten Server gesandt werden kann. Die Anfrage kann dabei manuell oder automatische generiert sein. Beispielsweise kann der "Client" im vorliegenden Sinne Bestandteil eines ERP-Systems des anfragenden Geschäftspartners sein.

Der Begriff "Geschäftspartner" ist im Rahmen der vorliegenden Erfindung dahingehend zu verstehen, dass er sowohl externe Kunden bzw. Auftraggeber des Anbieters als auch interne Kunden bzw. Auftraggeber des Anbieters (also bspw. Auftraggeber aus einem anderen Geschäftsbereich desselben Unternehmens) umfassen kann.

Somit ist für einen Nutzer des Clients als auch für einen Anbieter, der den Server zumindest teilweise betreibt oder nutzt ein sicherer und zuverlässiger netzwerkgestützter bzw. web-basierter Austausch von Informationen möglich. Trotz der hohen Sicherheit für den zugangsgeschützten Bereich ist die Kommunikation zwischen dem Client und dem Server bzw. dem Nutzer/ Kunden und dem Anbieter einfach durchzuführen.

Dem Client bzw. einem Nutzer des Clients wird ein komfortabler und sicherer Zugang zu dem zugangsgeschützten Bereich des Servers gestattet. Der Client kann über den zugangsgeschützten Bereich unter Austausch von Informationen mit dem Server bzw. dem Anbieter, der den Server zumindest teilweise betreibt und/oder nutzt, kommunizieren. Unabhängig von dem Geschäftsprozess ist mit dem Verfahren ein sicherer, netzwerkgestützter Informationsaustausch möglich.

Die Anfrage kann ein Geschäftsprozess wie bspw. eine Bestellung sein. Es können über den zugangsgeschützten Bereich aber auch weitere, sowohl den Geschäftsprozess unterstützende als auch dem Lieferanten/Anbieter und dem Kunden dienende oder den Geschäftsprozess begleitende Dienstleistungen in einfacher Weise bereitgestellt werden. Dies betrifft bspw. einen Austausch detaillierter Informationen zu angebotenen Waren oder Dienstleistungen, Reklamationen, Rechungsstellungen, Transaktionen auch finanzieller Art und dergleichen mehr.

Bei der Adressierung kann es sich bspw. um eine Zuweisung, Zuordnung, Verknüpfung, Verbindung, Zugriffsmöglichkeit oder einen Verweis auf diesen bzw. mit diesem zugangsgeschützten Bereich handeln, wobei dem Client bei elektronischer Aktivierung der (die Adressierung umfassenden) Zugangsberechtigung über das Netzwerk der zugangsgeschützte Bereich bspw. in einem Portal des Servers zugänglich gemacht wird. Als Adressierung kann auch ein sogenannter "shared folder" vorgesehen sein. Hierbei handelt es sich um einen für beide Seiten, also für den Kunden und für den Anbieter, zugänglichen Ordner, der ggf. veränderbare Informationen enthält.

Je nach Struktur des Netzwerks oder Art des innerhalb des Netzwerks zwischen dem Client und dem Server vorgenommenen Datentransfers kann die Adressierung in geeigneter Weise beschaffen sein. Dies hängt auch von der genutzten Soft- und/oder Hardware zur Bereitstellung der Kommunikation zwischen dem Client und dem Server sowie deren Funktion als Schnittstelle zwischen dem Netzwerk und dem Nutzer bzw. Kunden und dem Anbieter ab. Die Adressierung ermöglicht unabhängig von einer konkreten Ausgestaltung, dass zwischen dem Client und dem Server ein uni- oder bidirektionaler, passiver oder aktiver Austausch von Daten oder Informationen möglich ist.

Es kann bei den beschriebenen Verfahren unabhängig von einer Art der Adressierung vorgesehen sein, dass die Zugangsberechtigung aktiviert und damit von dem bzw. über den Client der zugangsgeschützte Bereich geöffnet wird.

Bei dem Client kann es sich um jede zur Übertragung elektronischer Daten geeignete Einrichtung, insbesondere einen Computer oder eine entsprechende Recheneinheit handeln. Als Client ist aber auch ein Telefon, bspw. Mobiltelefon oder eventuell eine für einen Datenaustausch entsprechend ausgestattete mediale Sende- und/oder Empfangseinrichtung denkbar.

Es kann einerseits vorgesehen sein, dass dem Nutzer oder Kunden, für den die Zugangsberechtigung bzw. der zugangsgeschützte Bereich gedacht ist und der die Anfrage über den Client abgesendet hat, der zugangsgeschützte Bereich mit der Zugangsberechtigung nur ausgehend von ein- und derselben Einrichtung geöffnet wird.

Andererseits kann es auch möglich sein, dass dem Nutzer mittels des Clients ausgehend von mindestens einer Einrichtung, also auch verschiedenen Einrichtungen, durch elektronisches Aktivieren der Zugangsberechtigung der Zugang in den zugangsgeschützten Bereich gewährt wird. In diesem Fall kann es sich bei der mindestens einen den Client verkörpernden Einrichtung bspw. um verschiedene Computer oder andere zum elektronischen Datenaustausch geeignete Vorrichtungen handeln, die dem Nutzer zur Verfügung stehen oder typischerweise durch Eingabe von Benutzername und Kennwort zur Nutzung zugänglich sind. Auf derartigen Vorrichtungen ist typischerweise eine Anwendung zur Datenübertragung, wie ein E-Mail-Programm oder Internet-Browser installiert. Dabei wird dem Nutzer die elektronisch aktivierbare Zugangsberechtigung gemäß einer für diese Anwendung spezifischen Autorisierung bereitgestellt und handhabbar gemacht.

Unter den Kunden kann auch eine aus mehreren Personen bestehende Kundenorganisation verstanden werden. Demnach kann der Zugang zu dem zugangsgeschützten Bereich mit der Zugangsberechtigung auch jeder dieser Personen der Kundenorganisation möglich sein.

Mit der elektronisch aktivierbaren Zugangsberechtigung ist ein einfaches Einloggen ohne Eingabe eines Benutzernamens und Kennworts in den zugangsgeschützten Bereich des Servers ausgehend von dem Client möglich. Dem Nutzer, für den der zugangsgeschützte Bereich vorgesehen ist, steht mit der elektronisch aktivierbaren Zugangsberechtigung eine Autorisierung oder ein Schlüssel für den zugangsgeschützten Bereich zur Verfügung. Hierfür kann die elektronisch aktivierbare Zugangsberechtigung eine geeignete Codierung oder einen geeigneten Datensatz aufweisen.

Dem Nutzer oder Kunden ist es somit möglich, jederzeit über den sicheren Zugang zu dem für ihn vorgesehenen Bereich (bspw. in dem Portal des Servers) Informationen zu dem Geschäftsprozess abzurufen oder auch einzugeben.

Eine mögliche Ausgestaltung sieht vor, dass die elektronisch aktivierbare Zugangsberechtigung über einen Hyperlink oder als ein Hyperlink bereitgestellt wird. Über diesen Hyperlink ist ausgehend von einem ersten Hypertext, innerhalb dem sich der Hyperlink befindet, eine Verbindung zu einem weiteren Hypertext herstellbar. Bei diesem weiteren Hypertext handelt es sich bspw. um eine Internetseite innerhalb des zugangsgeschützten Bereichs. Über den Hyperlink wird eine Verknüpfung mit dem zugangsgeschützten Bereich ermöglicht. Die Verbindung wird hierbei bspw. über einen Internet-Browser hergestellt. Selbstverständlich ist die Realisierung der Erfindung über jede Form von Link in jeder Form von elektronischem Dokument realisierbar.

Bei Durchführung des Verfahrens kann vorgesehen sein, dass die elektronisch aktivierbare Zugangsberechtigung unter Zugriff auf eine Datei, bspw. eine Login-Informationsdatei durch Hinzufügen spezifischer Login-Daten, die in einer personalisierten URL verschlüsselt werden, erstellt wird.

Die personalisierte URL wird mit dieser Zugangsberechtigung durch Rückgriff auf die Datei, bzw. die Login-Informationsdatei entschlüsselt, wodurch der Zugang zu dem zugangsgeschützten Bereich geöffnet wird.

Durch diese Maßnahmen wird eine sichere Verschlüsselung des zugangsgeschützten Bereichs des Servers sowie eine zuverlässige Entschlüsselung dieses zugangsgeschützten Bereichs ermöglicht.

Es kann des weiteren vorgesehen sein, dass die elektronisch aktivierbare Zugangsberechtigung in einer elektronischen Meldung, wie bspw. einer E-Mail, übermittelt wird. Eine derartige E-Mail wird zwischen dem Server und dem Client ausgetauscht. Im Rahmen des Geschäftsprozesses wird diese elektronische Meldung von dem Anbieter nach Eingang einer den Geschäftsprozess betreffenden Information, etwa einem am Anfang des Geschäftsprozesses eingehenden Auftrag, bspw. automatisch an den Kunden übersendet.

Der zugangsgeschützte Bereich kann durch Anklicken des Hyperlinks, der als Symbol, Textmarke oder Textsymbol vorliegt, mit der elektronisch aktivierbaren Zugangsberechtigung geöffnet werden. Somit wird einem der Partner oder dem Kunden durch Verbinden oder Verknüpfen auf bequeme Weise der sichere Zugang zu dem zugangsgeschützten Bereich gestattet.

Es ist des weiteren möglich, dass der Hyperlink, sofern er als reiner Text vorliegt, in einfacher Weise in eine Eingabeleiste oder ein Eingabefeld eines Internet-Browsers zu kopieren ist. In weiterer möglicher Ausgestaltung kann vorgesehen sein, dass die einen Code für den Zugriff aufweisende, elektronisch aktivierbare Zugangsberechtigung als Textdatei, Grafik, als elektronisches Medium oder in Form einer anderen, evtl. verschlüsselten Datei vorliegt, die in Ausgestaltung der Erfindung lediglich in ein dafür vorgesehenes Eingabefeld bspw. auf einer Internetseite zu kopieren ist, wodurch der Zugang in den zugangsgeschützten Bereich des Servers ebenfalls unter geringem Aufwand sicher hergestellt wird.

Zu Beginn des Verfahrens übermittelt der Nutzer oder Kunde über den Client dem Server, den der Anbieter nutzt oder betreibt, die Anfrage, die bspw. dateiformatierte Informationen aufweist. Nach Empfang dieser Anfrage wird in einem ERP-System des Anbieters, das mit dem Server verbunden sein kann, der Geschäftsprozess erzeugt. Bei Bearbeitung dieses Geschäftsprozesses werden die elektronische Meldung und die Zugangsberechtigung vorzugsweise automatisch erzeugt. Mit der elektronischen Meldung kann der Kunde in Reaktion auf seine Anfrage bspw. eine Bestätigung und zugleich die elektronisch aktivierbare Zugangsberechtigung für den ihm oder evtl. dem jeweiligen Geschäftsprozess zugeordneten Geschäftsbereich erhalten, so dass der Kunde jederzeit durch Zugriff auf diesen zugangsgeschützten Bereich des Portals des Anbieters Informationen über einen Fortgang des Geschäftsprozesses erhält.

Auf dem Computersystem für einen netzwerkgestützten Austausch von Informationen laufen als Reaktion auf eine in dem Server eingehende und von einem Client stammende Anfrage folgende Schritte ab:
- Definieren eines der Anfrage zugeordneten zugangsgeschützten Bereichs in dem Server,
- Erzeugen einer elektronisch aktivierbaren Zugangsberechtigung, die eine Adressierung des zugangsgeschützten Bereichs umfasst, und
- Übermitteln der Zugangsberechtigung an den Client, von dem die Anfrage stammt,
wobei ein Zugang zu dem zugangsgeschützten Bereich von dem Client durch elektronisches Aktivieren der Zugangsberechtigung erfolgt.

Es kann vorgesehen sein, dass das Computersystem ein mit dem Portal verbundenes ERP (Enterprise Ressource Planning)-System umfasst, wobei dieses ERP-System zum Empfang und Versand von Daten, insbesondere elektronischen Meldungen ausgebildet ist. ERP-Systeme dienen zur EDV-gestützten Handhabung einer ggf. großen Anzahl von in dem Unternehmen anfallenden Geschäftsprozessen, die untereinander verknüpft sein können.

Das Computersystem kann bspw. ein Server-Client-Netzwerk-System sein. Bei diesem Netzwerk kann es sich um das Internet, das World-Wide-Web oder ein Intranet handeln. Es ist denkbar, dass das System auch als ein Netzwerk oder als ein Teil eins Netzwerks konzipiert ist.

Auf dem Server laufen als Reaktion auf eine eingehende und von dem mindestens einen Client stammende Anfrage folgende Schritte ab:
- Definieren eines der Anfrage zugeordneten zugangsgeschützten Bereichs in dem Server,
- Erzeugen einer elektronisch aktivierbaren Zugangsberechtigung, die eine Adressierung des zugangsgeschützten Bereichs umfasst, und
- Übermitteln der Zugangsberechtigung an den Client, von dem die Anfrage stammt,
wobei ein Zugang zu dem zugangsgeschützten Bereich von dem Client durch elektronisches Aktivieren der Zugangsberechtigung erfolgt.

Mit diesem Server ist eine Kommunikation eines Nutzers oder Kunden mit dem Client und einem Anbieter, der den Server zumindest teilweisen betreibt und/oder nutzt, realisierbar.

Die elektronisch aktivierbare Zugangsberechtigung kann eine Adressierung eines zugangsgeschützten Bereichs in einem Server umfassen. Mit dieser elektronisch aktivierbaren Zugangsberechtigung ist durch elektronische Aktivierung eine Verbindung mit und ein Zugang zu dem zugangsgeschützten Bereich herstellbar.

Mit dieser Zugangsberechtigung steht ein Schlüssel für den Zugang in den zugangsgeschützten Bereich zur Verfügung, ohne dass hierzu bspw. Benutzername und Kennwort einzugeben sind. Durch einfache Eingabe der Zugangsberechtigung und/oder Aktivierung der Zugangsberechtigung wird der Zugang in den zugangsgeschützten Bereich des Portals gestattet. Hierzu kann die Zugangsberechtigung zumindest teilweise mit einer Codierung, die bspw. als Datensatz vorliegt, versehen oder als eine derartige Codierung ausgebildet sein. Es kann vorgesehen sein, dass mit der Zugangsberechtigung eine festgelegte, ggf. von weiteren Bedingungen abhängige Anzahl von Zugängen zu dem zugangsgeschützten Bereich, bspw. auch nur einmal möglich ist, oder dass der Zugang zu dem zugangsgeschützten Bereich beliebig oft möglich ist.

Die elektronisch aktivierbare Zugangsberechtigung kann als ein Bestandteil eines Links, bspw. eines Hyperlinks, oder vollständig als Link realisiert sein. Ohne Beschränkung der Allgemeinheit kann die Zugangsberechtigung mit einem Link versehen und somit derart aufgebaut sein, dass sie neben schriftlichen und/oder graphischen Informationen diesen Link enthält, über den der Zugang zu dem zugangsgeschützten Bereich gewährt wird. Alternativ ist es möglich, dass die elektronisch aktivierbare Zugangsberechtigung als jede kopierbare oder durch einen Nutzer manipulierbare oder alternativ zumindest nicht zerstörungsfrei kopierbare oder nicht-kopierbare bzw. nicht-manipulierbare verschlüsselte oder unverschlüsselte Datei, bspw. Textdatei oder Grafikdatei ausgebildet ist.

Es kann vorgesehen sein, dass der elektronisch aktivierbaren Zugangsberechtigung unter Zugriff auf eine Datei, bspw. eine Login-Informationsdatei die spezifischen Logindaten, die in einer personalisierten URL verschlüsselt sind, hinzugefügt sind. Durch diese Maßnahme wird bei Erstellung der Zugangsberechtigung eine Verbindung zu der personalisierten URL und/oder dem damit verbundenen zugangsgeschützten Bereich bspw. eines Portals des Servers hergestellt. Durch einfache Aktivierung oder Nutzung dieser Zugangsberechtigung, durch Rückgriff auf die gleiche Datei, bzw. die gleiche Login-Informationsdatei, ist der zugangsgeschützte Bereich in einfacher Weise zu öffnen.

Der zugangsgeschützte Bereich kann auf einem Computer oder einer entsprechenden Recheneinheit eines Anbieters von Waren, Informationen oder Dienstleistungen direkt oder indirekt lokalisiert sein, d.h. auch unter dem Umstand, dass der Anbieter den Server eines Dienstleisters nutzt, auf dem der zugangsgeschützte Bereich auf einem Computer oder einer Recheneinheit abgespeichert ist, kann der zugangsgeschützte Bereich von dem Anbieter genutzt werden.

Bei dem erfindungsgemäßen Verfahren zur Bereitstellung eines Zugangs in einen zugangsgeschützten Bereich in einem Portal eines Servers laufen als Reaktion auf eine in dem Server eingehende und von einem Client stammende Anfrage folgende Schritte ab:
- Definieren des der Anfrage zugeordneten zugangsgeschützten Bereichs in dem Portal des Servers,
- Erzeugen einer elektronisch aktivierbaren Zugangsberechtigung, die eine Adressierung des zugangsgeschützten Bereichs umfasst, und
- Übermitteln der Zugangsberechtigung an den Client, von dem die Anfrage stammt.

Mit dem Verfahren kann bspw. auch ein Zugang zu einem zugangsgeschützten Bereich innerhalb eines Portals des Servers bereitgestellt werden.

Die elektronisch aktivierbare Zugangsberechtigung kann als Hyperlink, als Bestandteil eines Hyperlinks oder einen Hyperlink aufweisend ausgebildet sein. Die elektronisch aktivierbare Zugangsberechtigung kann unter Zugriff auf eine Datei, z.B. eine Login-Informationsdatei durch Hinzufügen spezifischer Login-Daten, die in einer personalisierte URL verschlüsselt werden, erzeugt werden. Der Zugang zu dem zugangsgeschützten Bereich wird geöffnet, indem die personalisierte URL mit der elektronisch aktivierbaren Zugangsberechtigung durch Rückgriff auf die Datei, bzw. die Login-Informationsdatei entschlüsselt wird.

Die elektronisch aktivierbare Zugangsberechtigung kann in einer elektronischen Meldung, bspw. einer E-Mail, übermittelt werden. Ein Öffnen des zugangsgeschützten Bereichs kann durch Anklicken oder sonstige geeignete Aktivierung des Hyperlinks realisiert werden. Mit der Anfrage, die von dem Client an den Server übersandt wird, werden unter anderem dateiformatierte Informationen übermittelt. Insbesondere wird eine Anfrage eines Kunden von dem Client an den Server eines Anbieters übermittelt. Ausgehend von dieser Anfrage wird in einem ERP-System des Anbieters ein Geschäftsprozess erzeugt. Vertrauliche, dem Geschäftsprozess zugeordnete, im Laufe des Geschäftsprozesses zu aktualisierende Informationen kann der Kunde ausgehend von dem Client durch Öffnen des ihm zugeordneten zugangsgeschützten Bereichs mittels der elektronisch aktivierbaren Zugangsberechtigung vertraulich einsehen. Es ist auch denkbar, dass an einem bereits existierenden Geschäftsprozess über die Anfrage angeknüpft und weitergearbeitet wird, so dass dieser bereits bestehende Geschäftsprozess durch die Anfrage aktualisiert oder evtl. reaktiviert wird.

Die Erfindung erstreckt sich selbstverständlich auch auf Computerprogramme mit Programmcode, der dazu geeignet ist, bei Ablauf des Computerprogramms auf einem Computer ein erfindungsgemäßes Verfahren auszuführen, sowie auf computerlesbare Datenträgermedien mit darauf abgespeicherten erfindungsgemäßen Computerprogrammen und auf Computerprogrammprodukte mit derartigen computerlesbaren Datenträgermedien.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt ein Diagramm für eine Möglichkeit eines einen Geschäftsprozess begleitenden Informationsaustausches gemäß dem Stand der Technik.
- Figur 2: zeigt ein Diagramm für eine Ausführungsform eines erfindungsgemäßen Informationsaustausches, der einen Geschäftsprozess begleitet.
- Figur 3: zeigt in schematischer Darstellung ein Server-Client-System.

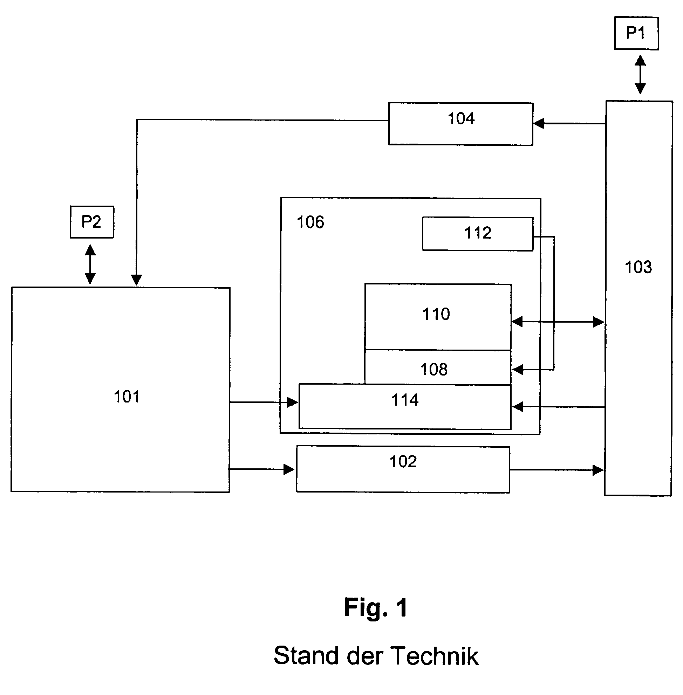

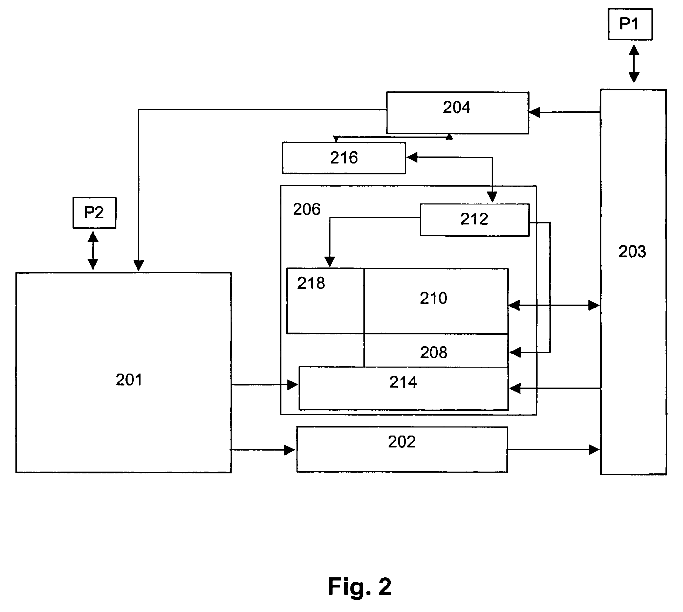

Figur 1 zeigt in schematischer Darstellung eine aus dem Stand der Technik bekannte Anordnung zur Durchführung eines Geschäftsprozesses aus Sicht eines ersten Geschäftspartners z.B. eines Anbieters P1. Ein zweiter Geschäftspartner, ein Kunde, Nutzer oder Anfrager P2 übermittelt über ein Computersystem 101 z.B. mittels eines sogenannten Light-Integrationstool einen Geschäftsprozess in Form einer Bestellung 102 an ein ERP-System 103 des Anbieters P1. Es findet ein Mapping statt, entweder ohne oder mit Nutzung von z.B. künstlicher Intelligenz, semantischer Texterkennung und dergleichen. Auf Grundlage dessen wird in dem ERP-System 103 des Anbieters P1 der Geschäftsprozess erzeugt. Bei dem Computersystem 101 des zweiten Geschäftspartners handelt es sich bspw. um ein Computernetzwerksystem, das eine Vielzahl von (nicht näher dargestellten) Komponenten umfassen kann, bspw. eine CPU, einen LAN-Server, eine Mehrzahl von Clients, ein ERP-System, sowie Peripheriegeräte wie Drucker, Monitore usw. Da der zweite Geschäftspartner in der Regel über ein Client-Terminal des Computersystems kommuniziert, wird im folgenden das Computersystem 101 sowie auch das Computersystem 201 der Figur 2 der Einfachheit halber als Client bezeichnet. Selbstverständlich ist darunter auch zu verstehen, dass der Geschäftsprozess automatisiert aus dem ERP-System des Computersystems initiiert wird.

Im Rahmen der Verarbeitung des Geschäftsprozesses erfolgt eine Rückmeldung 104, die formatiert und typischerweise auf elektronischem Weg an den Client 101 gesendet wird. Bei der Rückmeldung 104 kann es sich z.B. um eine Auftragsbestätigung handeln, die eine Nummer eines mit dem Geschäftsprozess verbundenen Auftrags aus dem ERP-System 103 des Anbieters P1 enthält.

Der Kunde P2 hat evtl. das Bedürfnis, zu dem Geschäftsprozess mehr Informationen zu erhalten. Zum Abruf dieser Informationen ist das von dem Anbieter P1 zur Verfügung gestellte Internetportal 106 zu nutzen. In der Regel befinden sich derartige Informationen zu Geschäftsprozessen nicht in einem öffentlich zugänglichen Bereich 114, sondern in einem zugangsgeschützten Bereich 110 des Internetportals 106.

Um in diesen zugangsgeschützten Bereich 110 zu gelangen, muss sich der Kunde P2 über den Client 101 einloggen, was in der Regel über einen manuellen Login 108 durch Eingabe von Benutzername und Kennwort erfolgt. Durch Vergleich mit in einer Datei oder Datenbank 112 abgelegten Informationen wird der Zugang zu dem zugangsgeschützten Bereich erteilt und der Kunde P2 kann auf die den Geschäftsprozess betreffenden Informationen zugreifen, die beispielsweise aus dem ERP-System 103 des Anbieters P1 zur Verfügung gestellt werden. Dabei kann es sich um Informationen zu einem Bearbeitungsstatus einer Bestellung handeln.

Figur 2 zeigt in schematischer Darstellung eine Ausführungsform der Erfindung am Beispiel eines Verfahrens zur Durchführung einer gesicherten Kommunikation, die im Rahmen eines Geschäftsprozesses zwischen zwei Partnern, nämlich einem Anbieter P1 und einem Kunden P2, erfolgt.

Ein ERP-System 203 eines Anbieters P1 ist mit einem Server des Anbieters P1 verbunden. Auf diesem Server befindet sich ein Portal 206, bspw. ein Internetportal. Dieses Portal 206 umfasst einen öffentlich für alle Nutzer zugänglichen öffentlichen Bereich 214 sowie einen zugangsgeschützten Bereich 210, der der Öffentlichkeit verschlossen ist und bspw. auch über einen manuellen Login von außen zugänglich ist.

Zu Beginn des Geschäftsprozesses sendet der Kunde (oder Nutzer oder Anfrager) P2 über einen Client 201, die dem Kunden P2 zur Verfügung stehen, bspw. mittels eines Light-Integrationstools einen Auftrag oder eine Bestellung 202 an den Server des Anbieters P1. Dabei findet ein Mapping statt, entweder ohne oder mit Nutzung von bspw. künstlicher Intelligenz, semantischer Texterkennung oder dergleichen. Auf Grundlage dessen kann in dem ERP-System 203 des Anbieters P1 zugleich der Geschäftsprozess erzeugt werden.

Dieser Geschäftsprozess wird bearbeitet, wobei eine formatierte Rückmeldung 204 erzeugt und vorzugsweise auf elektronischem Weg von dem Server zu dem Client 201 des Kunden P2 gesendet wird. Diese Rückmeldung 204 umfasst Informationen zu dem durch den Auftrag 202 in die Wege geleiteten Geschäftsprozess. Es handelt sich z.B. um eine Auftragsbestätigung, die eine Nummer eines mit dem Geschäftsprozess verbundenen Vorgangs oder Auftrags aus dem ERP-System 203 des Anbieters P1 enthält.

Hat der Kunde P2 das Bedürfnis, zu dem Geschäftsprozess mehr Informationen zu erhalten, so kann er diese mittels des Clients 201 aus dem Portal 206 abrufen. Bei diesem Client 201 kann es sich um jeden Computer oder jede entsprechende Recheneinheit mit geeigneter Software zum webbasierten Austausch von Daten, zu deren Nutzung der Nutzer P2 autorisiert ist, handeln.

Bei einem Erzeugen und/oder Senden der Rückmeldung 204 des Anbieters P1 an den Kunden P2 werden unter Zugriff auf eine Datei, bspw. eine Login-Informationsdatei 212 der in der Rückmeldung 204 befindlichen Nachricht kundenspezifische, eventuell vorgangsspezifische Login-Daten 216 hinzugefügt. Dieser Vorgang kann auch innerhalb des ERP-Systems 203 ablaufen. Diese Login-Daten 216 werden in einer personalisierten URL verschlüsselt. Auf diese Weise wird dem Client 201 des Kunden P2 eine elektronisch aktivierbare Zugangsberechtigung zu dem zugangsgeschützten Bereich 210 des Servers zur Verfügung gestellt. Nach Erhalt der Rückmeldung 204 bzw. Nachricht kann der Kunde P2 mit der elektronisch aktivierbaren Zugangsberechtigung diese URL nutzen. Wird die Rückmeldung 204 per E-Mail an den Client 201 des Kunden P2 geschickt, so ist vorzugsweise vorgesehen, dass die Zugangsberechtigung in einem der E-Mail beigefügten Link, insbesondere Hyperlink oder in ein Anhang, der ggf. einen Link enthält, übermittelt wird.

Will der Kunde P2 nun Informationen zu dem Geschäftsprozess erhalten, so muss er lediglich den die elektronisch aktivierbare Zugangsberechtigung aufweisenden Hyperlink anklikken. Der Kunde P2 wird dann über den Client 201 bzw. seine Netzwerkverbindung z.B. über ein Internet-Dienstprogramm (Browser) mit dem Portal 206 verbunden. Innerhalb des Portals 206 findet eine Entschlüsselung (manuell oder automatisch) der personalisierten URL statt. Die Entschlüsselung kann unter Rückgriff auf die gleiche Datei bzw. Login-Informationsdatei 212, die bereits bei der Verschlüsselung genutzt wurde, oder unter Rückgriff auf eine Replik oder dergleichen dieser Login-Informationsdatei 212, erfolgen.

Dem Kunden P2 bzw. Nutzer wird somit ohne Eingabe von Benutzername und Kennwort in den Client 201 ein Zugang zu dem für ihn personalisierten, zugangsgeschützten Bereich 210 bereitgestellt. Er kann sofort zu den den Geschäftsprozess betreffenden Informationen, die bspw. aus dem ERP-System 203 des Anbieters P1 zur Verfügung gestellt werden, weitergeleitet werden.

Erfindungsgemäß wird dem Kunden bzw. Geschäftspartner P2 vorteilhafterweise über einen automatischen Login 218, unter Verknüpfung mit der URL, über den Client 201 ausgehend von dem aktivierten Hyperlink, der Zugang zu zugangsgeschützten Bereich 210 gewährt. Die Informationen zu dem zugangsgeschützten Bereich 210 können mit dem Inhalt der Rückmeldung 202 vorgangsspezifisch korrespondieren. Der Zugang in den zugangsgeschützten Bereich 210 ist erfindungsgemäß wesentlich einfacher als bei dem in Figur 1 dargestellten Stand der Technik.

Alternativ kann auch ein manueller Login 208 vorgesehen sein. Dieser kann erfolgen, nachdem der Kunde P2 auf eine Seite des Portals 206 gelangt ist, auf der ihm zielgerichtete Informationen angeboten werden.

Erfindungsgemäß kann vorgesehen sein, dass die Rückmeldung 204 mehrere Login-Daten 216 beinhaltet, die der Nachricht des Anbieters P1 an den Client 201 des Kunden P2 beigefügt werden. In diesem Fall werden für verschiedene Informationen Links bereitgestellt. Eine zusätzliche Absicherung ist durch Nutzung von Cookies, anderen Signaturen usw. möglich.

Mit der vorliegenden Erfindung ist es demnach möglich, eine bidirektionale Kommunikation im Zusammenhang eines Geschäftsprozesses basierend auf einem nur unidirektionalen Mapping zu realisieren.

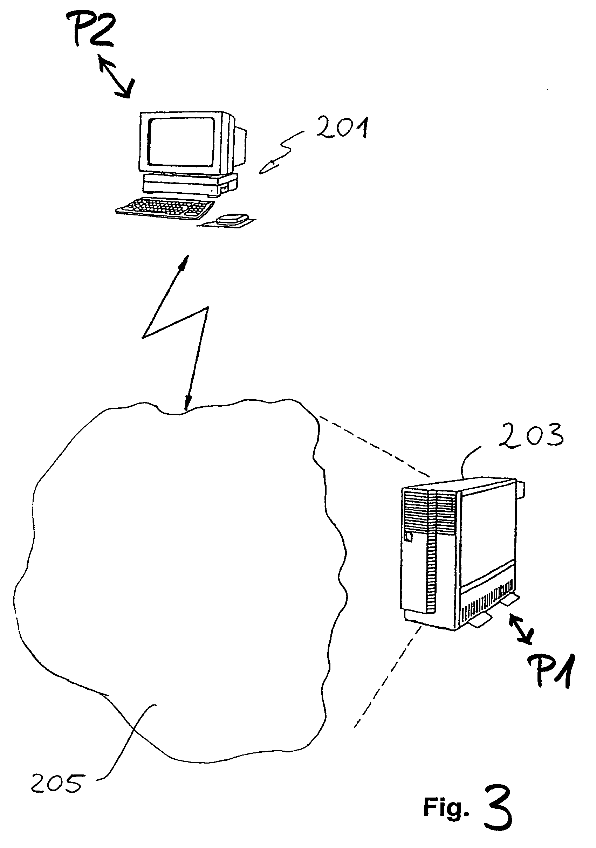

Figur 3 zeigt in schematischer Darstellung ein Server-Client-System, über das der erfindungsgemäße Geschäftsprozess zwischen zwei Partnern, einem Anbieter P1 und einem Kunden P2, durchzuführen ist. Dabei ist dem Kunden P2 ein Client 201, üblicherweise ein Computer, zugeordnet. Dem Anbieter P1 ist ein Server 203 zugeordnet. Der Client 201 und der Server 203 sind über ein Netzwerk 205 zum gegenseitigen Austausch von Daten miteinander verbunden. Im Rahmen der Erfindung ist denkbar, dass auch mehrere Netzwerke 205 wie bspw. ein Telefon- oder Faxnetz und das World Wide Web genutzt werden.

Bei Durchführung des erfindungsgemäßen Verfahrens sendet der Kunde P2 ausgehend von dem Client 201 über das Netzwerk 205 eine Anfrage an den Server 203 des Anbieters P1. In Reaktion dessen wird auf dem Server 203 ein der Anfrage zugeordneter zugangsgeschützter Bereich erzeugt. Des weiteren wird eine elektronisch aktivierbare Zugangsberechtigung, die eine Adressierung des zugangsgeschützten Bereichs umfasst, erzeugt. Diese elektronisch aktivierbare Zugangsberechtigung wird von dem Server 203 über das Netzwerk 205 an den Client 201, von dem die Anfrage stammt, übermittelt. Ein Zugang zu dem zugangsgeschützten Bereich auf dem Server 203 durch den Client 201 erfolgt durch elektronisches Aktivieren dieser Zugangsberechtigung.

## Patentansprüche

1. Verfahren zur Durchführung eines netzwerkgestützten Geschäftsprozesses, bei dem mindestens ein Client (201) mit einem Server (203) verbunden ist, wobei als Reaktion auf eine in dem Server (203) eingehende und von einem Client (201) stammende Anfrage (202) folgende Schritte ablaufen:
- Definieren eines der Anfrage (202) zugeordneten zugangsgeschützten Bereichs (210) in dem Server (203),
- Erzeugen einer elektronisch aktivierbaren Zugangsberechtigung, die eine Adressierung des zugangsgeschützten Bereichs (210) umfaßt, und
- Übermitteln der Zugangsberechtigung an den Client (201), von dem die Anfrage (202) stammt,
wobei ein Zugang zu dem zugangsgeschützten Bereich (210) von dem Client (201) durch elektronisches Aktivieren der Zugangsberechtigung erfolgt.

2. Verfahren nach Anspruch 1, bei dem die elektronisch aktivierbare Zugangsberechtigung als ein Hyperlink ausgebildet ist.

3. Verfahren nach Anspruch 1 oder 2, bei dem die elektronisch aktivierbare Zugangsberechtigung unter Zugriff auf eine Datei (212) durch Hinzufügen spezifischer Login-Daten (216), die in einer personalisierten URL verschlüsselt werden, erzeugt wird.

4. Verfahren nach einem der voranstehenden Ansprüche, bei dem die personalisierte URL mit der elektronisch aktivierbaren Zugangsberechtigung durch Rückgriff auf die Datei (212) entschlüsselt und somit der Zugang zu dem zugangsgeschützten Bereich (210) geöffnet wird.

5. Verfahren nach einem der voranstehenden Ansprüche, bei dem die elektronisch aktivierbare Zugangsberechtigung in einer elektronischen Meldung (204) übermittelt wird.

6. Verfahren nach einem der vorstehenden Ansprüche, bei dem der zugangsgeschützte Bereich (210) durch Anklicken des Hyperlinks mit der elektronisch aktivierbaren Zugangsberechtigung geöffnet wird.

7. Verfahren nach einem der vorstehenden Ansprüche, bei dem mit der Anfrage (202) dateiformatierte Informationen übermittelt werden.

8. Computersystem für einen netzwerkgestützten Austausch von Informationen, in dem als Reaktion auf eine in einem Server (203) eingehende und von einem mit dem Server (203) verbundenen Client (201) stammende Anfrage (202) folgende Schritte ablaufen:
- Definieren eines der Anfrage (202) zugeordneten zugangsgeschützten Bereichs (210) in dem Server (203),
- Erzeugen einer elektronisch aktivierbaren Zugangsberechtigung, die eine Adressierung des zugangsgeschützten Bereichs (210) umfaßt, und
- Übermitteln der Zugangsberechtigung an den Client (201), von dem die Anfrage (202) stammt,
wobei ein Zugang zu dem zugangsgeschützten Bereich (210) von dem Client (201) durch elektronisches Aktivieren der Zugangsberechtigung erfolgt.

9. Computersystem nach Anspruch 8, das ein mit dem Server (203) verbundenes ERP-System (203) aufweist.

10. Computersystem nach Anspruch 8 oder 9, bei dem das ERP-System (203) zum Empfang und Versand von Daten (202, 204) ausgebildet ist.

11. Server, auf dem als Reaktion auf eine eingehende und von einem mit dem Server (203) verbundenen Client (201) stammende Anfrage (202) folgende Schritte ablaufen:
- Definieren eines der Anfrage (202) zugeordneten zugangsgeschützten Bereichs (210) in dem Server (203),
- Erzeugen einer elektronisch aktivierbaren Zugangsberechtigung, die eine Adressierung des zugangsgeschützten Bereichs (210) umfaßt, und
- Übermitteln der Zugangsberechtigung an den Client (201), von dem die Anfrage (202) stammt,
wobei ein Zugang zu dem zugangsgeschützten Bereich (210) von dem Client (201) durch elektronisches Aktivieren der Zugangsberechtigung erfolgt.

12. Elektronisch aktivierbare Zugangsberechtigung, die eine Adressierung eines zugangsgeschützten Bereichs (210) in einem Server (203) umfaßt und die dazu geeignet ist, durch elektronische Aktivierung eine Verbindung mit und einen Zugang zu dem zugangsgeschützten Bereich (210) herzustellen.

13. Elektronisch aktivierbare Zugangsberechtigung nach Anspruch 12, die als ein Bestandteil eines Hyperlinks realisiert ist.

14. Elektronisch aktivierbare Zugangsberechtigung nach Anspruch 12 oder 13, der unter Zugriff auf eine Datei (212) spezifische Login-Daten (216), die in einer personalisierten URL verschlüsselt sind, hinzugefügt sind.

15. Elektronisch aktivierbare Zugangsberechtigung nach einem der Ansprüche 12 bis 14, mit der durch Rückgriff auf die Datei (212) der zugangsgeschützte Bereich (210) zu öffnen ist.

16. Verfahren zur Bereitstellung eines Zugangs zu einem zugangsgeschützten Bereich eines Servers (203) in Reaktion auf eine in dem Server (203) eingehende, von einem mit dem Server (203) verbundenen Client (201) stammende Anfrage (202), mit den folgenden Schritten:
- Definieren eines der Anfrage (202) zugeordneten zugangsgeschützten Bereichs (210) in dem Server (203),
- Erzeugen einer elektronisch aktivierbaren Zugangsberechtigung, die eine Adressierung des zugangsgeschützten Bereichs (210) umfaßt, und
- Übermitteln der Zugangsberechtigung an den Client (201), von dem die Anfrage (202) stammt.

17. Verfahren nach Anspruch 16, bei dem die elektronisch aktivierbare Zugangsberechtigung als ein Hyperlink ausgebildet ist.

18. Verfahren nach Anspruch 16 oder 17, bei dem die elektronisch aktivierbare Zugangsberechtigung unter Zugriff auf eine Datei (212) durch Hinzufügen spezifischer Login-Daten (216), die in einer personalisierten URL verschlüsselt werden, erzeugt wird.

19. Verfahren nach einem der Ansprüche 16 bis 18, bei dem die personalisierte URL mit der elektronisch aktivierbaren Zugangsberechtigung durch Rückgriff auf die Datei (212) entschlüsselt und somit der Zugang zu dem zugangsgeschützten Bereich (210) geöffnet wird.

20. Verfahren nach einem der Ansprüche 16 bis 19, bei dem die elektronisch aktivierbare Zugangsberechtigung in einer elektronischen Meldung (204) übermittelt wird.

21. Verfahren nach einem der Ansprüche 16 bis 20, bei dem der zugangsgeschützte Bereich (210) durch Anklicken des Hyperlinks mit der elektronisch aktivierbaren Zugangsberechtigung geöffnet wird.

22. Verfahren nach einem der Ansprüche 16 bis 21, bei dem mit der Anfrage (202) dateiformatierte Informationen übermittelt werden.

23. Verfahren nach einem der Ansprüche 16 bis 22, bei dem eine Anfrage (202) eines Kunden (P2) von dem Client (201) an den Server (203) eines Anbieters (P1) übermittelt wird und ein Geschäftprozeß auf der Grundlage der Anfrage (202) in einem ERP-System (203) des Anbieters (P1) erzeugt wird.

24. Computerprogramm mit Programmcode, um alle Schritte eines Verfahrens nach einem der Ansprüche 1 bis 7 oder 16 bis 23 durchzuführen, wenn das Computerprogramm auf einem Computer oder einer entsprechenden Recheneinheit ausgeführt wird.

25. Computerprogrammprodukt mit Programmcode, der auf einem computerlesbaren Datenträger gespeichert ist, um ein Verfahren nach einem der Ansprüche 1 bis 7 oder 16 bis 23 durchzuführen, wenn das Computerprogramm auf einem Computer oder einer entsprechenden Recheneinheit ausgeführt wird.
